# EUROPEAN PATENT APPLICATION

(11) **EP 1 513 340 A1**
(43) Date of publication of application: **09.03.2005**
(21) Application number: 02733336.8
(22) Date of filing: 06.06.2002
(51) Int. Cl.: H04N 5/44, H04H 1/00, H04B 1/16

(54) **DIGITAL BROADCAST RECEIVER CAPABLE OF AUTOMATICALLY ACQUIRING ELECTRONIC PROGRAM GUIDES OF BROADCASTING STATIONS**

(71) Applicant: FUJITSU LIMITED, Kawasaki-shi, Kanagawa 211-8588 (JP)
(72) Inventor: IKEDA, Yuuichirou, c/o FUJITSU LIMITED, Kawasaki-shi, Kanagawa 211-8588 (JP)
(74) Representative: Mohun, Stephen John
(86) International application number: PCT/JP2002/005583
(87) International publication number: WO 2003/105468

(57) **Abstract**

When acquiring electronic program guide (EPG) in digital broadcast receiver apparatus, broadcast receiver apparatus automatically acquires and stores station-specific EPGs while in non-receiving state. When receiver apparatus is in non-receiving state, prescribed transmission path is selected, and all or only desired station-specific EPGs are acquired in sequence. Examples of methods of judging non-receiving state include method of confirming reception of broadcast signals in transmission path selection device, method of confirming output of broadcast play data for watching in display synthesis device, and method of confirming whether power state is standby state. Examples of selection of prescribed transmission path include method of selecting transmission path including station with smallest amount of stored station-specific EPG data, method of selecting transmission path including station set by viewer, method of performing search based on keywords or categories input by viewer and selecting transmission path including matching station, and method of determining transmission paths for EPG acquisition from state of update of all-station EPG.

## Description

### TECHNICAL FIELD

This invention relates to a digital broadcast receiver apparatus, and in particular to a digital broadcast receiver apparatus capable of automatically acquiring electronic program guides for specific stations.

### BACKGROUND ART

There exist over 100 stations (channels) for digital broadcasting, and it is difficult for a viewer to grasp information for all broadcast programs at once. Hence program selection support methods and timer recording methods using electronic program guides, as well as methods of acquisition of electronic program guides, have been proposed in order to facilitate the selection of programs which viewers would like to watch and to assist in timer recording operations.

An electronic program guide is a type of broadcast data which is received together with video, audio and other data at the time of digital broadcasting, and includes such contents as the broadcast station, title, broadcast time, category, and description of contents of programs. Hence by displaying the electronic broadcast guide on the television screen or elsewhere, the viewer can easily perform such operations as confirming the contents of programs, selecting programs, and setting timer recording.

For example, Japanese Laid-open Patent Application No. 2001-218126 proposes a device which retrieves the start time of a program set by the viewer from the electronic program guide, and, when the start time of the program approaches, displays program information relating to the program on the screen, thereby preventing the viewer from missing a program to be watched.

Further, Japanese Laid-open Patent Application No. H11-308542 proposes a device which analyzes programs selected in the past by the viewer from electronic program guide as the viewer's preferences, and, by reflecting these preferences in acquisition of the electronic program guide, assists in the selection of programs by the viewer.

In addition, Japanese Laid-open Patent Application Nos. 2001-36846, 2000-115098, 2000-13708, 2000-287144, and 2001-8124 also disclose inventions in which, by reflecting the interests and tastes of the viewer in the acquisition and display of the electronic program guide, program selection, recording, and timer recording are assisted.

Japanese Laid-open Patent Application No. 2001-36842 proposes a transmission/reception method and receiver apparatus for acquisition of electronic program guide data even when any other transmission media is being received, by means of a transmission method which multiplexes electronic program guide data of other transmission media with certain transmission media.

Japanese Laid-open Patent Application No. 2000-341593 proposes a program management device capable of detecting special programs and new programs, by using an electronic program guide to detect broadcast patterns.

Other technology related to electronic program guide is described by Japanese Laid-open Patent Application No. 2001-8119, Japanese Laid-open Patent Application No. 2001-218188, and Japanese Laid-open Patent Application No. 2001-502124.

However, among electronic program guides there exist all-station electronic program guide which is distributed on all the transmission paths in a network, and station-specific electronic program guides which are distributed only over particular transmission paths.

An all-station electronic program guide has information relating to all the stations in the network, but contains only limited content which might appear in newspapers or magazines, such as program titles, categories, and broadcast times; moreover, the guide contain information only for several days into the future.

Station-specific electronic program guides contain more detailed program information than all-station electronic program guide, and contain information for a greater number of days into the future than do all-station electronic program guide, but are distributed only via transmission paths corresponding to the respective stations.

For example, in BS digital broadcasts, an all-station electronic program guide contains only program information for up to a maximum of eight days of television broadcasting, three days of radio broadcasting, and two days of data broadcasting; however, station-specific electronic program guides can contain up to a maximum 32 days of program information.

Here, "transmission path" means a communication path, a plurality of which exist in the same network, for broadcast data; a single receiver apparatus can simultaneously receive data over a plurality of transmission paths. In networks such as satellite broadcasting, ground wave broadcasting, and cable television, transmission path switching is necessary to receive the broadcast signals of different stations, even within the same network.

For example, in ground wave broadcasting it is necessary to switch stations, and in BS broadcasting it is necessary to switch transport streams. The information of a plurality of stations is multiplexed and distributed in a transport stream.

Due to increases in the number of stations, even if the viewer attempts to select programs by relying only on an all-station electronic program guide, because of deficiencies in the quality and quantity of the contents of the all-station electronic program guide, it is not possible for the viewer to identify programs to watch; moreover, business companies which create and distribute programs may wish to include a greater amount of information in station-specific electronic program guides in order to differentiate programs from other programs and gain a large number of viewers with interest in a program. Hence it is anticipated that in future there will be increasing utilization of station-specific electronic program guides.

Further, in the ground wave digital broadcasting which is planned for the near future, due to the circumstance that in the past each broadcast station has independently distributed signals in ground wave analog broadcasting, it is expected to be difficult to summarize broadcasts in a single location in order to provide all-station electronic program guide capable of being received over all transmission paths in the network. In this case, utilization of station-specific electronic program guides capable of being received over respective transmission paths is essential.

On the other hand, in order to acquire a station-specific electronic program guides, it is necessary to receive broadcast signals from a transmission path including the station, and watching is interrupted due to switching of transmission paths; as a result, station-specific electronic program guides cannot be acquired for stations other than the station which a viewer is watching.

In Japanese Laid-open Patent Application No. 2000-333091, a method of automatically acquiring a program guide by switching to a plurality of networks is proposed; but there is no proposal of a method of acquisition of station-specific electronic program guides for which transmission path switching is necessary even within the same network.

Given the above problems and the mounting importance of station-specific electronic program guides, it is necessary to automatically acquire station-specific electronic program guides without placing a burden on the viewer, in order to resolve the problem of the existence of networks in which distribution of all-station electronic program guide is itself anticipated to be difficult, and the problem of the difficulty of acquiring station-specific electronic program guides.

### DISCLOSURE OF THE INVENTION

An object of this invention is the provision of a broadcast receiver apparatus which automatically acquires station-specific electronic program guides when the receiver apparatus is in a non-receiving state, without imposing a burden on the viewer.

In order to achieve the above object, a broadcast receiver apparatus which acquires electronic program guide, has a transmission path selection device, which switches to a specified transmission path and receives broadcast signals from the transmission path; a demultiplexing device, which separates said electronic program guide and broadcast play data from said received broadcast signals; an electronic program guide storage device, which stores said electronic program guide; and a control device, which judges a receiving state of said broadcast receiver apparatus, determines a prescribed transmission path including a station-specific electronic program guide being included by the broadcast signals of each transmission path and being to be acquired, acquires said station-specific electronic program guide included by said determined transmission path when said broadcast receiver apparatus is judged to be in a non-receiving state, and stores said station-specific electronic program guide in said electronic program guide storage device.

In one embodiment of the above invention, when the receiver apparatus is in a non-receiving state, station-specific electronic program guides are automatically acquired.

In another embodiment, when there is a transition to a state in which the receiver apparatus main power is on but the auxiliary power is off, that is, to a standby state, station-specific electronic program guides are automatically acquired.

In another embodiment, the control device determines the transmission path including the station-specific electronic program guide to be acquired so as to increase the stored amount for the station with the smallest amount of stored station-specific electronic program guide data, and performs automatic acquisition of the station-specific electronic program guide.

In another embodiment, the control device determines the transmission path including a station which broadcasts program corresponding to keywords and categories selected by the viewer, and performs automatic acquisition of the station-specific electronic program guide for that station.

By means of the above invention, the viewer can acquire all of, or a desired, station-specific electronic program guide while watching programs normally, without interruption of a program during watching, through switching of the transmission path accompanying acquisition of a station-specific electronic program schedule. Also the viewer can acquire preferentially a station-specific electronic program guide corresponding to a preferred program specified by keyword and so on.

### BRIEF DESCRIPTION OF THE DRAWINGS

Fig. 1 shows the relation between a network and transmission paths;
Fig. 2 shows examples of broadcast signals included by transmission paths within the same network;
Fig. 3 shows an example of the configuration of a digital broadcast receiver apparatus of this invention;
Fig. 4 shows a configuration of a digital broadcast receiver apparatus, relating to electronic program guide storage processing in first embodiment of this invention;
Fig. 5 is a flowchart of the first embodiment;
Fig. 6 shows an example of the data format of station-specific electronic program guides stored in the electronic program guide storage device;
Fig. 7 shows an example of the data format of all-station electronic program guide for a network, stored in the electronic program guide storage device;
Fig. 8 shows the configuration relating to electronic program guide storage processing in a second embodiment;
Fig. 9 is a flowchart of the second embodiment;
Fig. 10 shows the configuration relating to play control processing;
Fig. 11 is a flowchart of play control processing;
Fig. 12 shows the configuration relating to electronic program guide storage processing in a third embodiment;
Fig. 13 is a flowchart of the third embodiment;
Fig. 14 shows an example of the format of data stored in a program guide acquisition setting station holding device;
Fig. 15 shows the configuration relating to electronic program guide storage processing in a fourth embodiment;
Fig. 16 is a flowchart for the fourth embodiment;
Fig. 17 shows the configuration relating to electronic program guide storage processing in a fifth embodiment;
Fig. 18 is a flowchart for the fifth embodiment;
Fig. 19 shows an example of the storage format of a station-specific program guide acquisition flag list, in which station-specific electronic program guides to be acquired are listed;
Fig. 20 shows the configuration relating to electronic program guide storage processing in a sixth embodiment; and,
Fig. 21 is a flowchart for the sixth embodiment.

### BEST MODE FOR CARRYING OUT THE INVENTION

Below, embodiments of the invention are explained, referring to the drawings. However, the technical scope of this invention is not limited to these embodiments, but extends to the inventions described in the scope of claims and to inventions equivalent thereto.

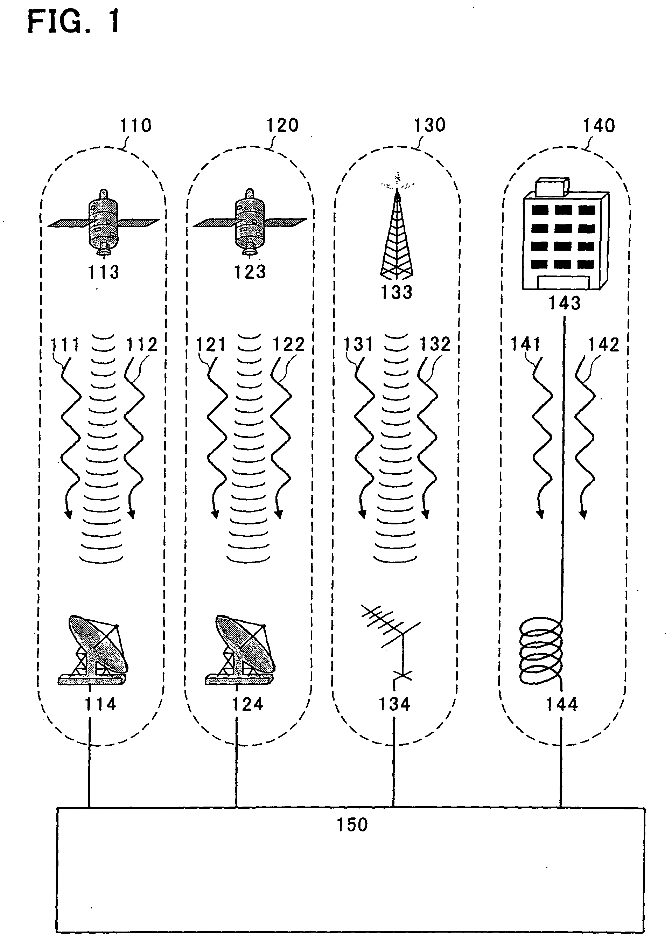

Fig. 1 shows the relation between a network and transmission paths. In this drawing, four networks are depicted. Network 110 is a BS satellite broadcasting network, network 120 is a CS satellite broadcasting network, network 130 is a ground wave broadcasting network, and network 140 is a cable television network.

In the network 110, broadcast signals distributed from the BS satellite 113 are received by a receiving antenna 114 of the receiver apparatus 150; in the network 120, broadcast signals distributed from the CS satellite 123 are received by a receiving antenna 124; in the network 130, broadcast signals distributed from a broadcast station 133 are received by a receiving antenna 134; and in the network 140, broadcast signals distributed by a cable television program distribution company are received via a cable 144.

In this example, a plurality of transmission paths 111, 112, distinguished by different transport streams, exist in the network 110; a plurality of transmission paths 121, 122, distinguished by different transport streams, also exist in the network 120; a plurality of transmission paths 131, 132, distinguished by different frequencies, exist in the network 130; and a plurality of transmission paths 141, 142, distinguished by different transport streams, exist in the network 140.

Thus a plurality of networks 110, 120, 130, 140 exist in such a broadcast system; and even within the same network, there exist a plurality of transmission paths.

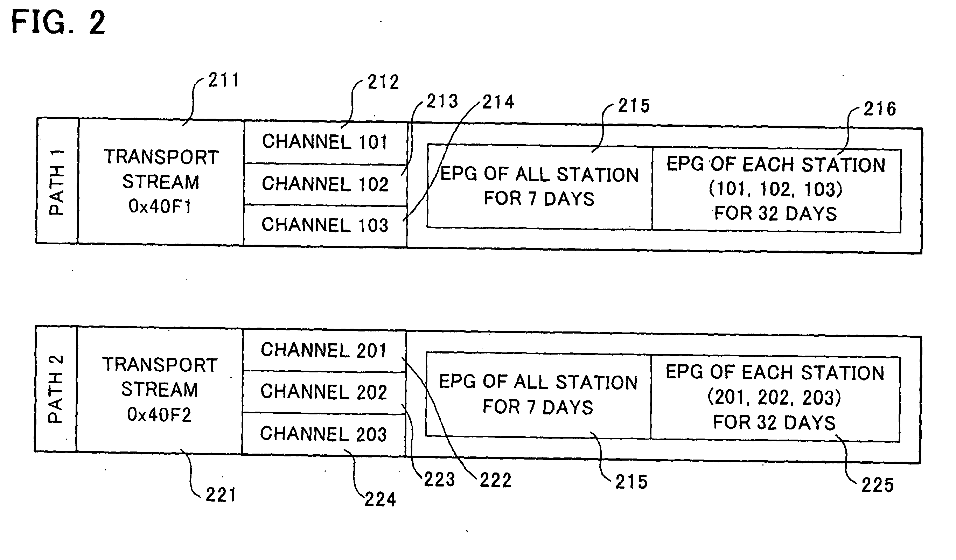

Fig. 2 shows examples of broadcast signals included by transmission paths within the same network. In Fig. 2, a transmission path 1 and transmission path 2 are shown among the plurality of transmission paths belonging to the same network, whether BS satellite broadcasting, CS satellite broadcasting, or cable television.

In transmission path 1, broadcast signals from the stations (hereafter also frequently called "channels") 101, 102, 103 is included. In transmission path 2, broadcast signals from the stations 201, 202, 203 is included. The transmission paths are distinguished by the different transport streams:

The broadcast signals from the transmission path 1 have, in the transport stream 211 identified by the transmission path identifier 0×40F1, the broadcast play data 212 of channel 101, broadcast play data 213 of channel 102, broadcast play data 214 of channel 103, all-station electronic program guide 215, and station-specific electronic program guides 216.

The all-station electronic program guide 215 is an electronic program guide for seven days for all stations within the network; the same guide is included by the transmission path 2.

The station-specific electronic program guides 216 are electronic program guides for 32 days for the channels 101, 102, 103.

The broadcast signals from the transmission path 2 have, in the transport stream 221 identified by the transmission path identifier 0x40F2, the broadcast play data 222 of channel 201, broadcast play data 223 of channel 202, broadcast play data 224 of channel 203, all-station electronic program guide 215, and station-specific electronic program guides 225.

The station-specific electronic program guides 225 are electronic program guides for 32 days for the channels 201, 202, 203.

By selecting the transmission path identifier of the transmission path 1 in the broadcast receiver apparatus, and receiving broadcast signals from the transmission path 1, the broadcast play data 212, 213, 214 of the stations 101, 102, 103, the all-station electronic program guide 215, and the station-specific electronic program guides 216 can be acquired, but the station-specific electronic program guide 225 included by the broadcast signals from the transmission path 2 cannot be acquired from the broadcast signals received from transmission path 1.

Thus in order to acquire station-specific electronic program guides, the viewer must specify the transmission path including the station-specific electronic program guide to be acquired, and must switch to this transmission path and receive the broadcast signals. In the case of ground wave broadcasts, stations (channels) and transmission paths are in a one-to-one correspondence, and selection of a channel is equivalent to selection of a transmission path.

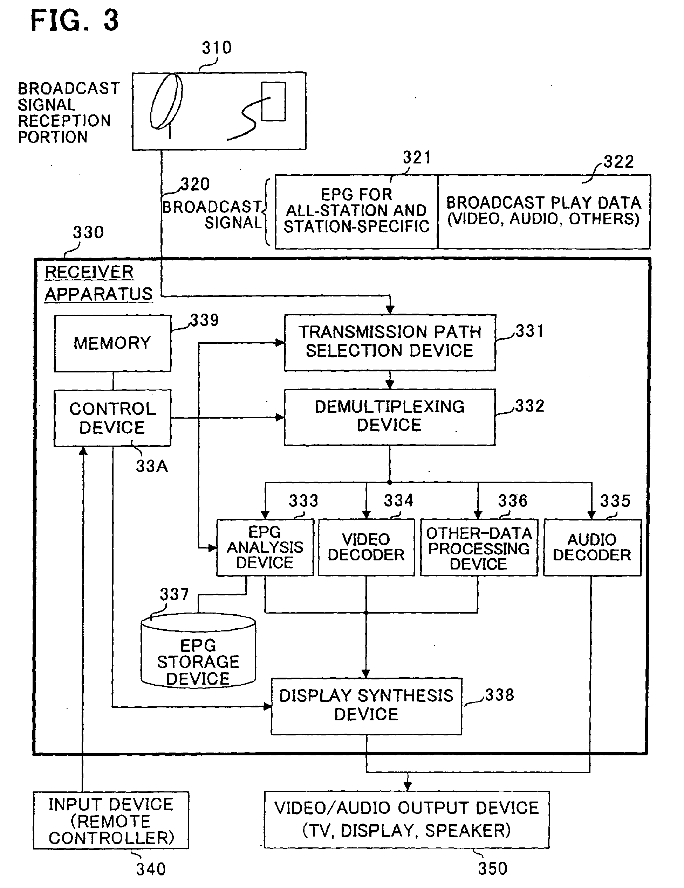

Fig. 3 shows an example of the configuration of a digital broadcast receiver apparatus of this invention.

The broadcast signal reception portion 310 includes an antenna and cable connection terminal; broadcast signals 320 distributed via radio waves or cable are input to the receiver apparatus 330, the receiver apparatus 330 acquires and stores electronic program guides, and also receives input from an input device 340 (remote controller, front-panel button, keyboard, mouse, or similar) as necessary, and outputs display signals to a video/audio output device 350 (TV, display, speaker, or similar).

The above broadcast signals 320 comprise all-station and station-specific electronic program guides 321, and broadcast play data 322 including video, audio, and other data.

In the above receiver apparatus 330, the transmission path selection device 331 switches the transmission path and receives broadcast signals from the transmission path, and outputs the received broadcast signals to the demultiplexing device 332. The demultiplexing device separates all-station and station-specific electronic program guides 321 and broadcast play data 322 from the broadcast signals, and outputs the all-station and station-specific electronic program guides to the electronic program guide analysis device 333, the video signals among the broadcast play data to the video decoder 334, the audio data to the audio decoder 335, and data other than video and audio to the other-broadcast-data processing device 336. The electronic program guide analysis device 333 analyzes the all-station and station-specific electronic program guides, converts the guides into a format enabling easy storage in the electronic program guide storage device 337, records the guides in the above electronic program guide storage device, and in addition reads electronic program guides from the electronic program guide storage device according to instructions from the control device 33A and outputs the read guide to the display synthesis device 338. The video decoder 334 demodulates (decodes) video data within the broadcast play data according to instructions from the control device and outputs the results to the display synthesis device; the audio decoder 335 demodulates audio data within the broadcast play data according to instructions from the control device and outputs the results to the audio/video output device 350 via a receiver apparatus external terminal or similar; and the other-broadcast-data processing device 336 analyzes data other than audio and video within the broadcast play data, and outputs this data to the display synthesis device.

The electronic program guide storage device 337 stores electronic program guides, the display synthesis device 338 synthesizes the input all-station and station-specific electronic program guides, video data, and other broadcast data, and outputs the result to the video/audio output device via the receiver apparatus external terminal and similar.

The control device 33A reads control programs and data from the memory 339, writes data thereto, issues operation instructions to other devices within the receiver apparatus, receives input from the input device, and performs processing according to input.

Next, a first embodiment is explained. The first embodiment is an example in which automatic acquisition of station-specific electronic program guides is performed if the receiver apparatus is in a non-receiving state.

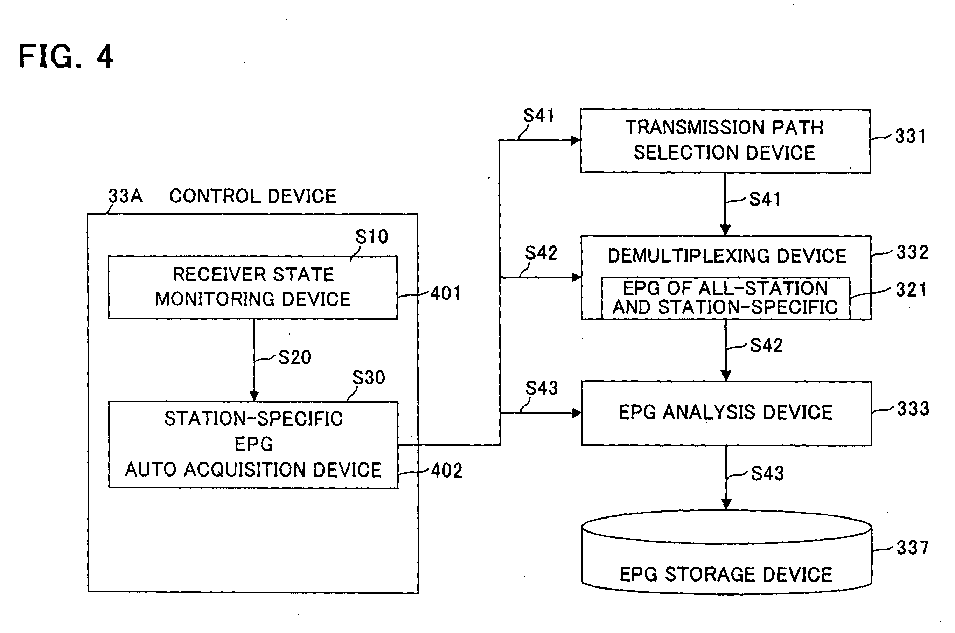

Fig. 4 shows a configuration relating to electronic program guide storage processing in the first embodiment. The receiver apparatus state monitoring device 401 is a device which judges whether the receiver apparatus state is a receiving state. The station-specific electronic program guide automatic acquisition device 402 is a device which issues instructions necessary for station-specific electronic program guide acquisition to the transmission path selection device 331, demultiplexing device 332, electronic program guide analysis device 333, and electronic program guide storage device 337, in particular, among the various devices within the receiver apparatus.

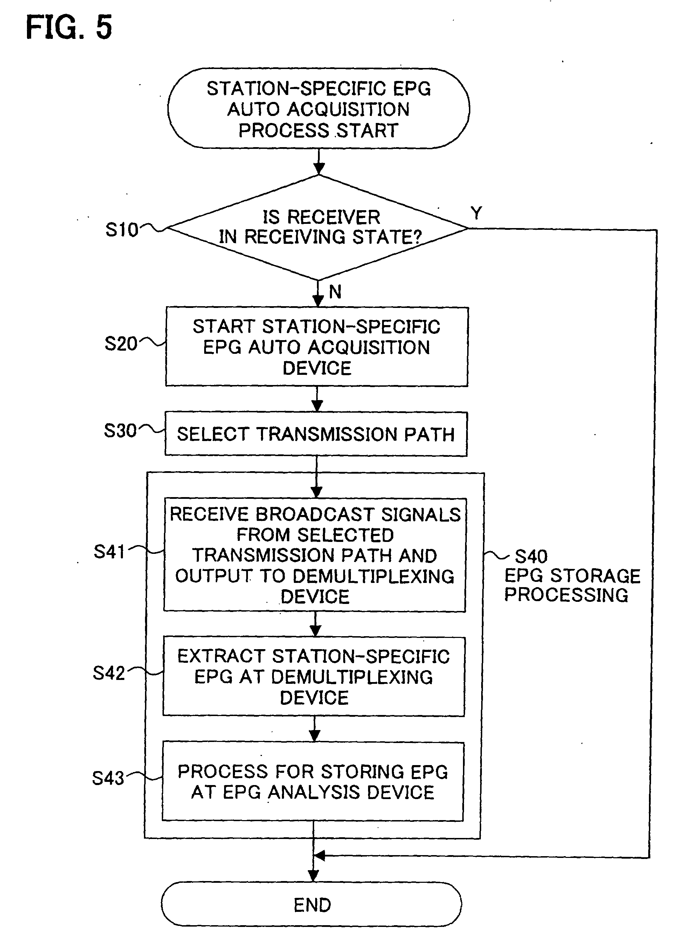

In Fig. 4, step numbers Sxx correspond to the flowchart of the first embodiment in Fig. 5. Hence the explanation also refers to Fig. 5.

In automatic station-specific electronic program guide acquisition processing, the control device 33A first judges whether the receiver apparatus is in a non-receiving state (S10) .

As examples of the method of reception state judgment in step S10, as described below, a check may be performed at fixed intervals to determine whether the state is a watching state in which broadcast play data for watching is being output by the display synthesis device, and if the state is a watching state the device is judged to be in a receiving state; or, if the power supply state is not a standby state, the state may be judged to be a receiving state; or, if there is broadcast signal input to the transmission path selection device, the state may be judged to be a receiving state.

If the receiver apparatus is in a non-receiving state, the automatic station-specific electronic program guide acquisition device is started (S20). If the state is a receiving state, the processing for automatic station-specific electronic program guide acquisition ends.

The automatic station-specific electronic program guide acquisition device 402 started in step S20 selects a prescribed transmission path (S30). As examples of a method of selection of a prescribed transmission path, as described below, a transmission path including the station for which the smallest amount of station-specific electronic program guide data has been stored may be selected; or, a transmission path may be determined based on a keyword input by the viewer.

The automatic station-specific electronic program schedule acquisition device 402 issues an instruction to the transmission path selection device to receive broadcast signals from the selected transmission path and to output the signals to the demultiplexing device 332, and the transmission path selection device 331 performs processing according to this instruction (S41).

The automatic station-specific electronic program guide acquisition device 402 issues an instruction to the demultiplexing device 332 to extract station-specific electronic program guides from the input broadcast signals and to output the guides to the electronic program guide analysis device 333, and the demultiplexing device performs processing according to this instruction (S42).

The automatic station-specific electronic program guide acquisition device 402 issues an instruction to the electronic program guide analysis device 333 to convert the input station-specific electronic program guides into an easily stored format and to store the guides in the electronic program guide storage device 337, and the electronic program guide analysis device performs processing according to this instruction (S43), to end the processing of the first embodiment.

The above steps S41, S42, S43 are together called the electronic program guide storage processing step S40.

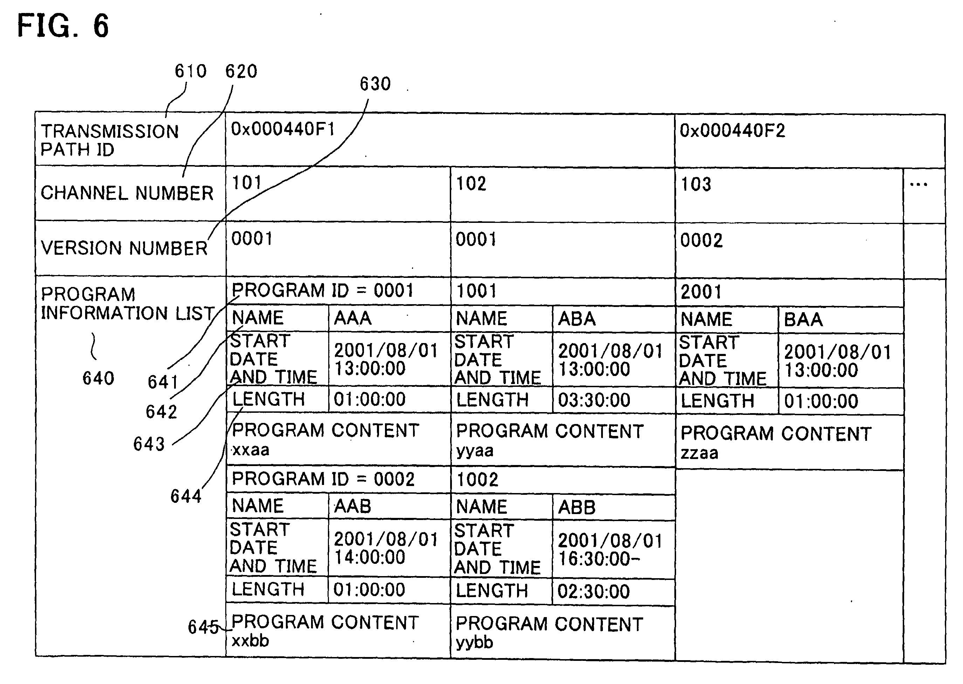

Fig. 6 shows an example of the data format of station-specific electronic program guides stored in the electronic program guide storage device. Stored data fields are the transmission path identifier 610, channel number 620, version number 630, and program information list 640; subfields of the program information list 640 are the program ID 641, name 642, start date and time 643, length 644, and program contents 645.

The transmission path identifier 610 is a symbol used to identify the transmission path; the channel number 620 indicates the station (channel) of the broadcast program; the program ID 641 is a symbol used to identify the program; the name 642 is the program title; the start date and time 643 is information on the date and time at which the program begins; and the length 644 is information on the broadcast. duration of the program. The program contents 645, not shown, comprises such information as a detailed description of the program, the program category, and performers.

The version number 630 is a number, assigned for each station, used to manage the update status of the electronic program guide. For example, larger numbers may indicate more recent information. When two electronic program guides exist, upon comparing the version numbers of each, if the version numbers are the same there have been no updates to the electronic program guide, but if the version numbers are different, the program guide with the larger version number has more recently updated content.

In this example, information is held relating to two stations for the channels 101, 102 included by the transmission path identifier 0x000440F1. For channel 101, there are stored a program name AAA with program content xxaa, to be broadcast for one hour from exactly 13:00 on August 1, 2001, and a program name AAB with program content xxbb, to be broadcast for one hour from exactly 14:00 on August 1, 2001.

An all-station electronic program guide can, as an inherent characteristic, be acquired over any transmission path within the network; in the above-described electronic program guide storage processing S40, by replacing "station-specific" with "all-station", similar storage processing can be performed for all-station electronic program guide.

In the embodiment described below, an example in which all-station electronic program guide is also stored in the electronic program guide storage device will be described; this is possible for the above-described reason.

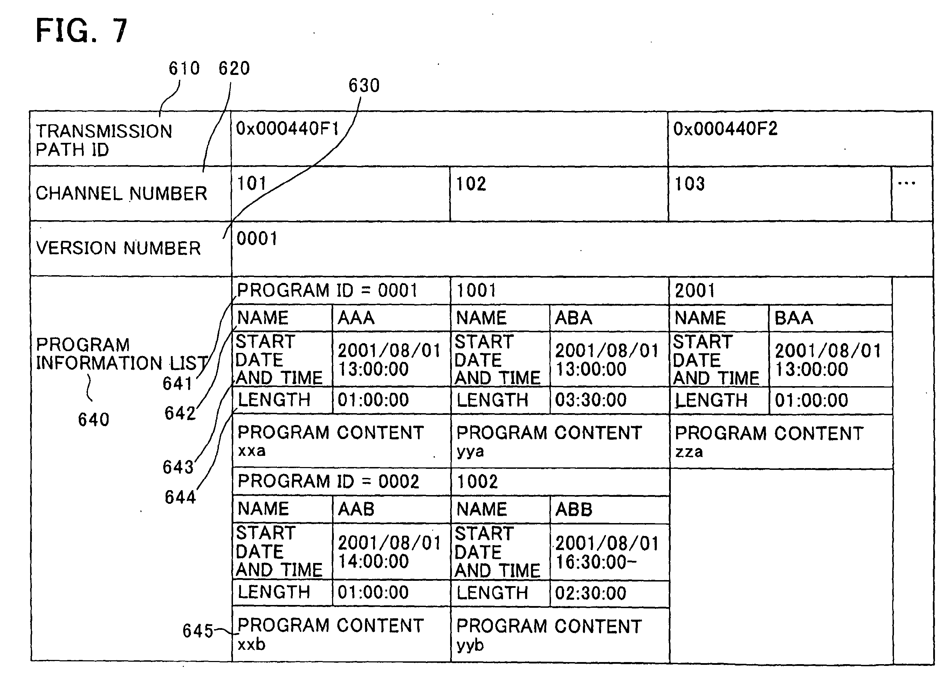

Fig. 7 shows an example of the data format of all-station electronic program guides for a network, stored in the electronic program guide storage device. The fields of stored data are the same as the fields existing in station-specific electronic program guide in Fig. 6, and has the transmission path identifier 610, channel number 620, version number 630, and program information list 640, subfields of which are the program ID 641, program name 642, start date and time 643, length 644, and program contents 645.

Differences between the stored station-specific electronic program guides and all-station electronic program guides include the fact that the version number 630 in an all-station electronic program guide is a single number for an all-station electronic program guide of the network, but exists separately for each station in a station-specific electronic program guide. Also, the contents of the program contents 645 in an all-station electronic program guide is simpler, and contains less information, than in a station-specific electronic program guide.

When storing all-station electronic program guides in the electronic program guide storage device, an all-station electronic program guide is stored, by network, in the format of Fig. 7.

As described above, in this first embodiment, if the receiver apparatus is in a non-receiving state, processing to automatically acquire station-specific electronic program guides is begun, and station-specific electronic program guides in the format shown in Fig. 6 can be stored. Hence when a specific transmission path is not selected and a program is not being watched, the receiver apparatus can automatically select an arbitrary transmission path and acquire necessary station-specific electronic program guides. Similarly, all-station electronic program guides in the format shown in Fig. 7 can also be stored. Also, an all-station electronic program guide can also be acquired while in the watching state.

Next, a second embodiment is explained. The second embodiment is an another example in which steps S10 and S30 in Fig. 5 are modified. In this example, the watching state of the receiver apparatus is checked at fixed intervals, and if in a non-watching state, the station for which the stored amount of station-specific electronic program guides stored up to that time is retrieved and the station-specific electronic program guide for this station is acquired; if in the watching state, broadcasting reproduction data for watching is output to the video/audio output device.

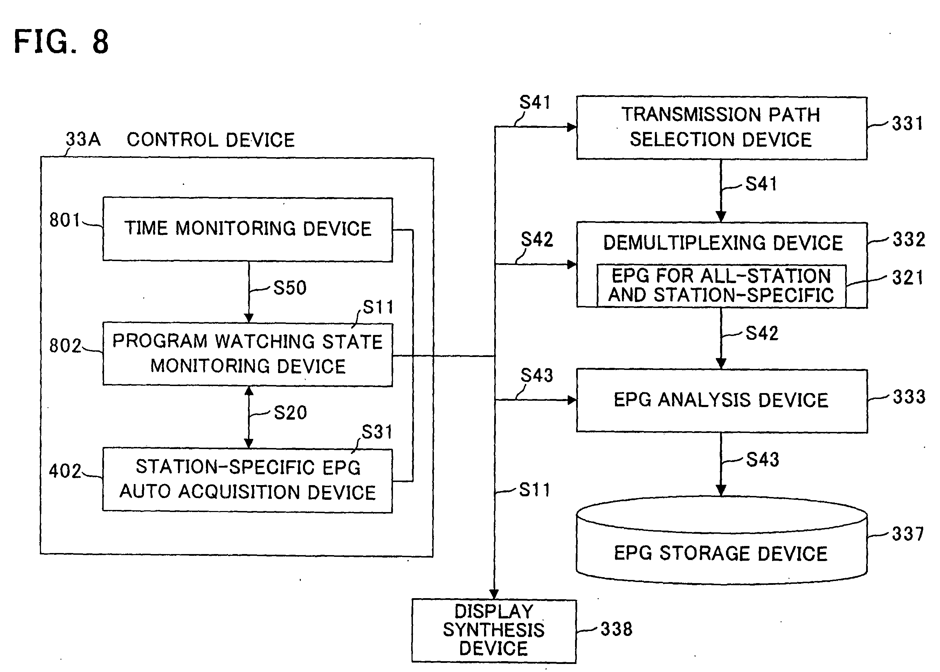

Fig. 8 shows the configuration relating to electronic program guide storage processing in the second embodiment. The time monitoring device 801 manages the time of the receiver apparatus, and output the current time held by the device; the program watching state monitoring device 802 monitors the watching state of the receiver apparatus.

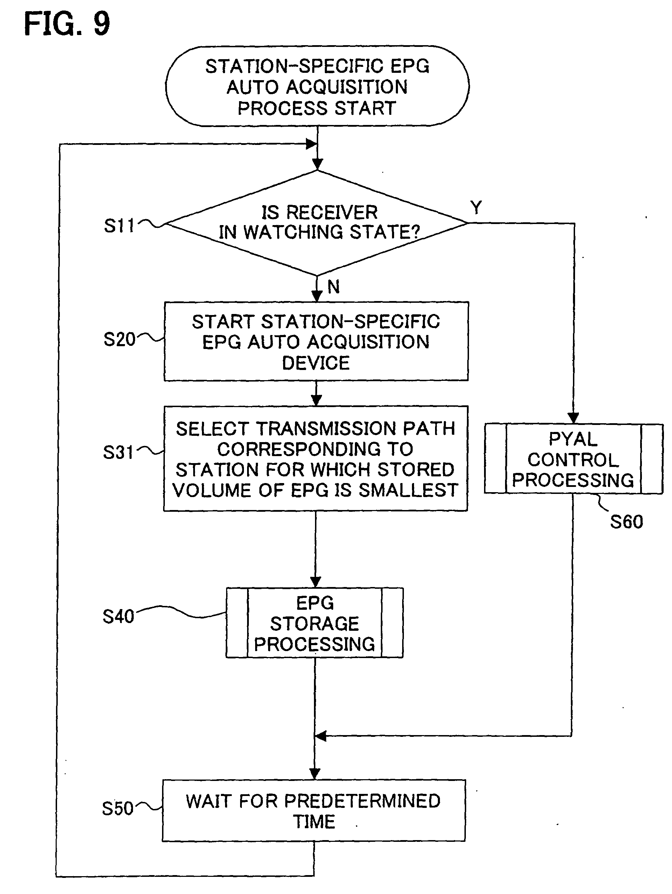

Steps numbered Sxx in Fig. 8 correspond to steps in the flowchart of the second embodiment in Fig. 9. Hence the following explanation also refers to Fig. 9.

In automatic station-specific electronic program schedule acquisition processing, the control device first judges whether the receiver apparatus is in a watching state (S11).

The watching state judgment step S11 can for example be executed as follows. The program watching state monitoring device 802 judges the receiver apparatus to be in a watching state if broadcast play data for watching is being output to the video/audio output device by the display synthesis device 338, and judges the state to be a non-watching state if there is no such output.

If the state is a non-watching state, the automatic station-specific electronic program guide acquisition device 402 is started (S20).

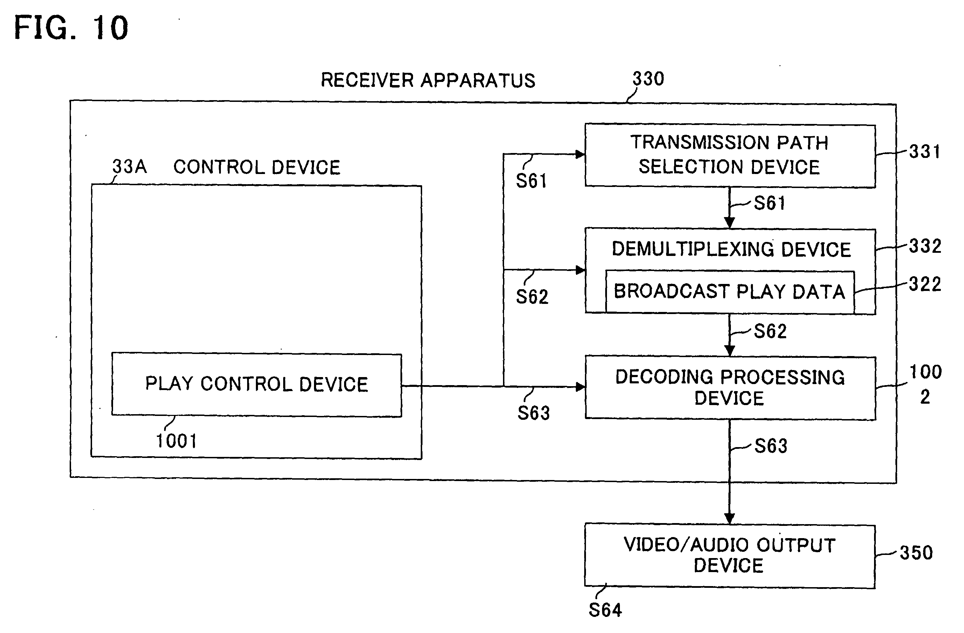

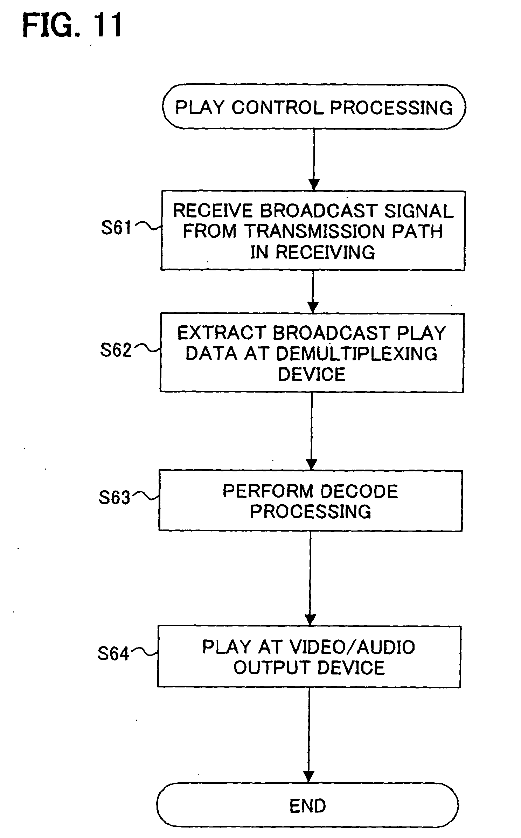

If the state is a watching state, then the viewer is watching some program, and so play control processing (S60) is performed. Play control processing is explained referring to Fig. 10 and Fig. 11. When the play control processing (S60) ends, after waiting for a predetermined time (S50), the processing of step S11 is again performed.

The above automatic station-specific electronic program guide acquisition device 402 which was started in step S20 finds the station for which the stored volume of station-specific electronic program guide data is smallest, and determines as the transmission path for acquisition the transmission path including this station (S31).

The transmission path selection processing of step S31 can be executed as follows, for example. The automatic station-specific electronic program guide acquisition device 402 issues an instruction to the electronic program guide analysis device 333 to read stored station-specific electronic program guides. The read station-specific electronic program guides are stored in the memory 339 of Fig. 3, in the data format of Fig. 6. The automatic station-specific electronic program schedule acquisition device counts the number of program IDs 641 for each station, and judges the station, among all the stations, for which the number of program IDs is the smallest to be the station with the smallest amount of stored schedule data.

The processing can also be executed as follows. The final date and time of each of the station programs is calculated from the start dates and times 643 and lengths 644 read from the station-specific electronic program guides, and the station for which the final program date and time is earliest is judged to be the station with the smallest amount of stored program guide data.

The automatic station-specific electronic program guide acquisition device performs electronic program guide storage processing (S40) based on the selected transmission path, and after waiting a predetermined time (S50) after completion of the electronic program guide storage processing, again begins the processing of step S11.

Fig. 10 shows the configuration relating to play control processing. The play control device 1001 is a device which issues instructions, relating to play control, to the transmission path selection device 331, demultiplexing device 332, decoding processing device 1002, and video/audio output device 350, among the various devices of the receiver apparatus. The decoding processing device 1002 represents in summary the video decoder 334, audio decoder 335, other-broadcast-data processing device 336, and display synthesis device 338 in Fig. 3.

In Fig. 10, step numbers Sxx correspond to step numbers in the flowchart of play control processing in Fig. 11. Hence the following explanation also refers to Fig. 11.

In play control processing, first the play control device 1001 issues an instruction to the transmission path selection device 331 to receive broadcast signals from the transmission path selected by the input device 340 of Fig. 3 and to output the signals to the demultiplexing device 332; the transmission path selection device performs processing according to this instruction (S61).

The play control device 1001 issues to the demultiplexing device 332 an instruction to extract broadcast play data from the input broadcast signals, and further to separate this into video, audio, and other broadcast data, and to output each of these to the decoding processing device 1002; the demultiplexing device performs processing according to this instruction (S62).

The play control device 1001 issues to the decoding processing device 1002 an instruction to process the input broadcast play data, and to output the result to the video/audio output device 350; the decoding processing device performs processing according to this instruction, and performs decoding processing, display synthesis processing, and output processing of the data corresponding to this audio, video, and similar (S63).

The video/audio output device plays the input signals (S64), and the play control processing ends.

According to this embodiment, station-specific electronic program guide acquisition is performed automatically according to stored amounts of data when the receiver apparatus is not in a watching state. Hence the receiver apparatus can perform automatic acquisition of station-specific electronic program guides, without causing the viewer to change his own watching habits. Also, the transmission path is selected according to the amount of data stored, so that a situation in which the amount of station-specific electronic program guide information is extremely small for some stations does not occur.

Next, a third embodiment is explained. This embodiment is an another example in which steps S10 and S30 in Fig. 5 are modified. When the reception state is detected as having made a transition to a standby state, the station-specific electronic program guide of a station set in advance by the viewer can be automatically acquired.

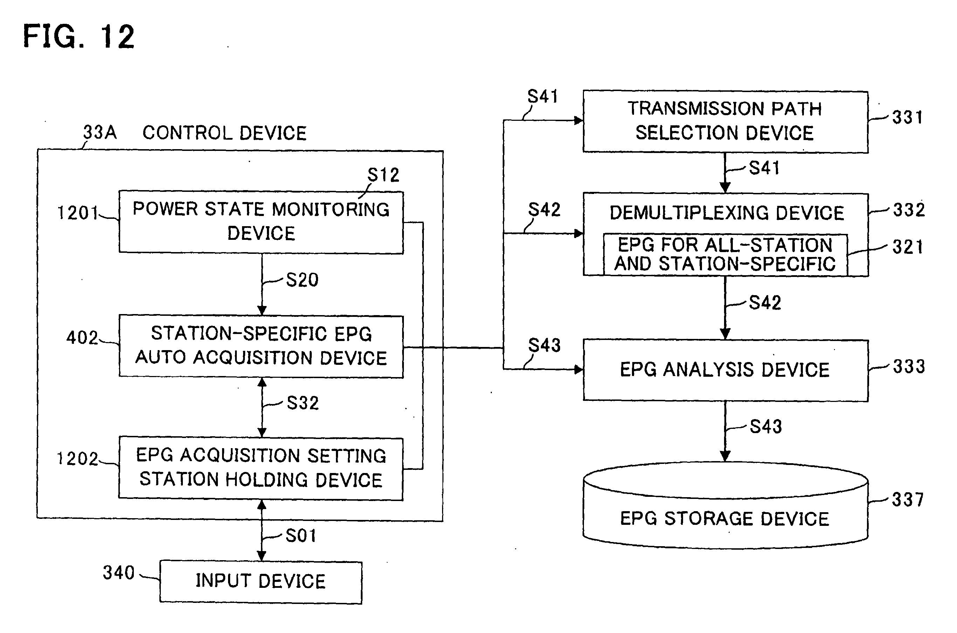

Fig. 12 shows the configuration relating to electronic program guide storage processing in the third embodiment. In Fig. 12, the power state monitoring device 1201 starts the automatic station-specific electronic program guide acquisition device 402 when the receiver apparatus makes a transition to standby state (the state in which the main power is on, but the auxiliary power is off), and the program schedule acquisition setting station holding device 1202 holds information on the station (channel) for which program guide acquisition is desired by the viewer, and responds to queries from the automatic station-specific electronic program guide acquisition device 402 with the transmission path for the next acquisition.

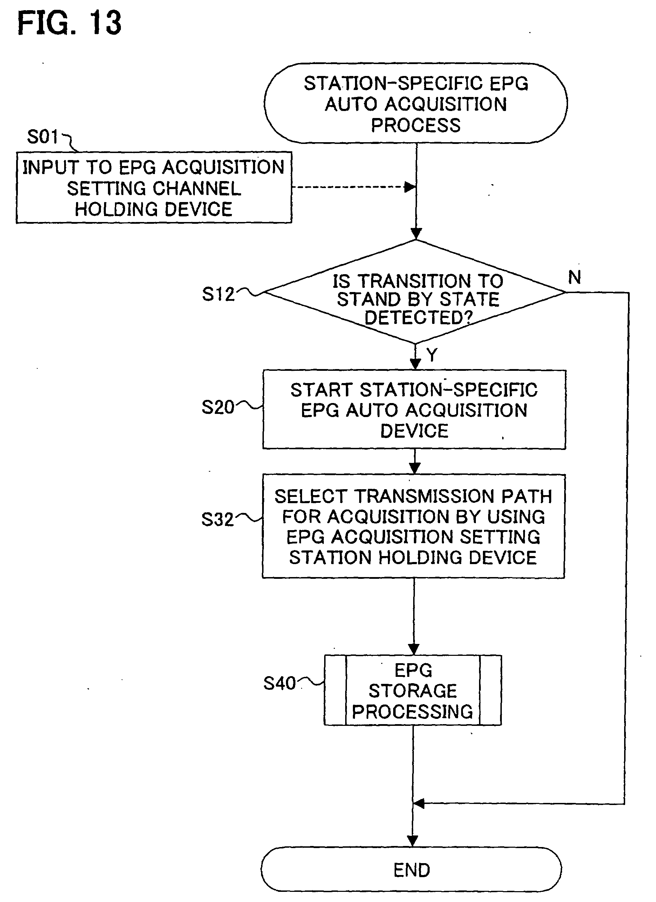

Steps numbered Sxx in Fig. 12 correspond to steps in the flowchart of the third embodiment in Fig. 13. Hence the following explanation also refers to Fig. 13.

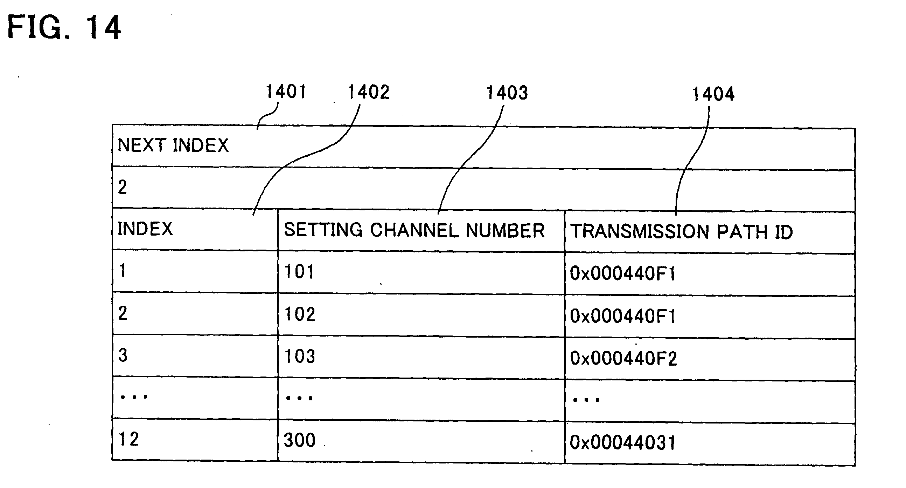

As prerequisite conditions for the processing of this embodiment, it is assumed that the remote controller or other input device 340 has been used by the viewer in advance to select a station for which program guide acquisition is desired, and that this station is held in the program guide acquisition setting station holding device (S01), in a data format such as that shown in Fig. 14.

Fig. 14 shows an example of the format of data stored in a program guide acquisition setting station holding device. In Fig. 14, the data held includes the index 1402, setting channel number 1403, transmission path identifier 1404 of the transmission path including the station (channel) of the setting channel number 1403, and next-station index 1401 which is a pointer to the index of the next station for program guide acquisition.

In channel setting mode, when a channel number is input by the viewer from the input device, three pieces of data, which are the channel number, the transmission path identifier of the transmission path including the channel, and a number obtained by adding 1 to the maximum index number currently being held, are combined each other as a set in the program guide acquisition setting station holding device.

In the example of Fig. 14, there are settings for twelve stations, and the station identified by the next-station index of 2 is channel 102, the transmission path identifier for which is 0x000440F1.

Returning to the explanation of the flowchart of Fig. 13, in processing for automatic acquisition of station-specific electronic program guides, similarly to the second embodiment, the control device first checks whether a transition to standby state has been detected (S12). Detection of transitions to standby state (S12) is performed automatically by the power state monitoring device 1201.

If a transition to standby state has been detected, the automatic station-specific electronic program guide acquisition device is started (S20), and if not detected, processing ends.

Upon being started, the automatic station-specific electronic program guide acquisition device 402 determines, from the program guide acquisition setting station holding device 1202, the transmission path for program guide acquisition (S32).

The transmission path selection processing of step S32 can for example be executed as follows. The automatic station-specific electronic program guide acquisition device 402 queries the program guide acquisition setting station holding device 1202 for the next transmission path for program guide acquisition. Because the next-station index is 2, the program guide acquisition setting station holding device 1202 responds to the automatic station-specific electronic program guide acquisition device 402 with 0×000440F1, which is the transmission path identifier of the channel 102 in the row with index 2. At the same time, the program guide acquisition setting station holding device 1202 increases the next-station index value by 1, and again saves the updated list. Upon the next query, the next-station index is used, and if the next-station index exceeds the maximum index value (in the example of Fig. 14, 12), the value is returned to 1. In this way, loop processing is performed.

Based on the input transmission path, the automatic station-specific electronic program guide acquisition device 402 performs electronic program guide storage processing S40, and when electronic program guide storage processing is completed, processing to automatically acquire station-specific electronic program guides ends.

The program guide acquisition setting station holding device 1202 may respond a plurality of stations.

According to this embodiment, a non-receiving state is detected through a transition to standby state, processing for station-specific electronic program guide acquisition is begun, and the program schedule setting channel holding device can be used to reflect viewer preferences on what program guides should be acquired. It is anticipated that, when there exist numerous stations (channels) and the number of station-specific electronic program guides to be acquired is very large, acquisition of all station-specific electronic program guides may not always be possible. However, by means of this embodiment, by limiting the number of stations for program guide acquisition, station-specific electronic program guides can reliably be acquired for those stations in which the viewer is interested, so that convenience for the user is improved.

Next, a fourth embodiment is explained. The fourth embodiment is an another example in which steps S10 and S30 in Fig. 5 are modified. In this example, when the transmission path selection device judges that the state is a non-receiving state, station-specific electronic program guides are acquired for programs identified through keywords and categories input by the viewer.

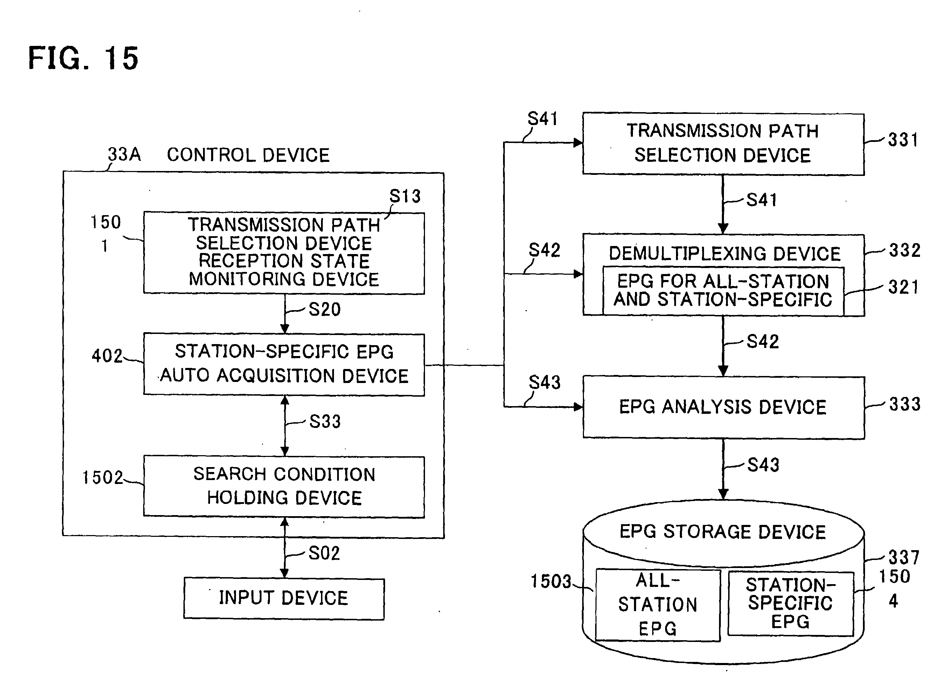

Fig. 15 shows the configuration relating to electronic program guide storage processing in the fourth embodiment. In Fig. 15, the transmission path selection device reception state monitoring device 1501 is a device which responds with the state of broadcast signal reception in the transmission path selection device. The search condition holding device 1502 is a device which holds information on keywords or categories for which acquisition is desired by the viewer, and which, in response to queries from the automatic station-specific electronic program guide acquisition device, responds with saved keywords and categories. In this embodiment, in addition to the normally stored station-specific electronic program guides 1504, all-station electronic program guide 1503 are also stored. The data format for stored all-station electronic program guide is assumed to be as in the example of Fig. 7. No particular stipulations are made regarding the data format of stored station-specific electronic program guides.

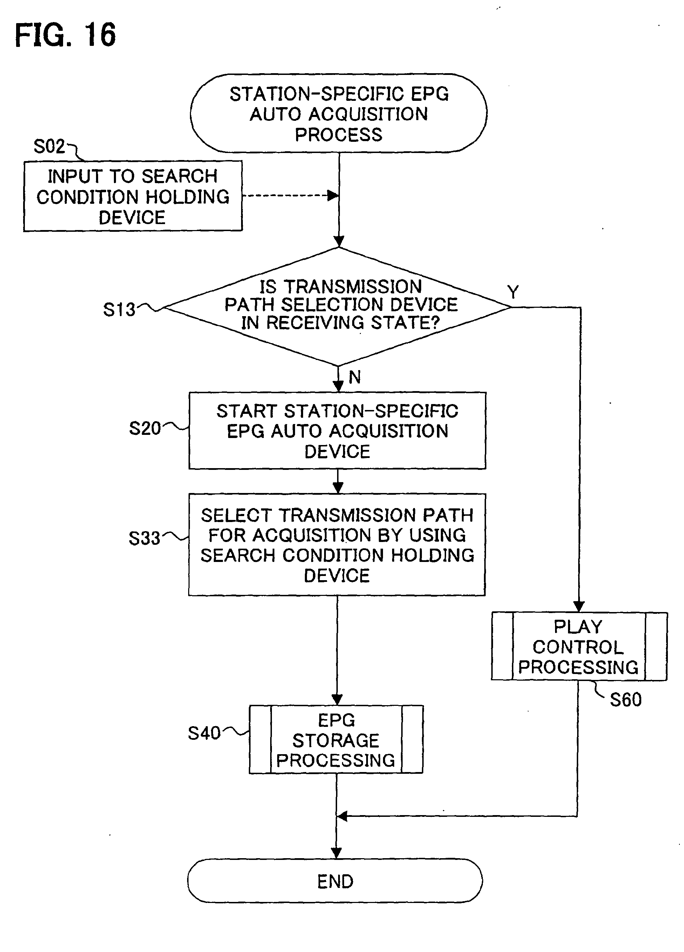

Steps numbered Sxx in Fig. 15 correspond to steps in the flowchart of the fourth embodiment in Fig. 16. Hence the following explanation also refers to Fig. 16.

As a prerequisite for automatic processing to acquire station-specific electronic program guides, it is assumed that the viewer has specified, in advance, keywords and categories for desired programs, using a remote controller or other input device (S02).

In processing for automatic acquisition of station-specific electronic program guides, the control device 33A first judges whether the transmission path selection device is in a receiving state (S13). If not in the receiving state, the automatic station-specific electronic program guide acquisition device is started (S20). If in the receiving state, play control processing is performed (S60). When play control processing is completed, automatic station-specific electronic program guide acquisition processing also ends.

The automatic station-specific electronic program guide acquisition device started in step S20 determines, as the transmission path, the station including a program to which the keywords and categories held by the search condition holding device 1502 apply (S33).

The method to determine the transmission path in step S33 can for example be executed as follows. The automatic station-specific electronic program guide acquisition device 402 queries the search condition holding device 1502 for held keywords and categories, and saves the information of the response to memory 339. Next, the automatic station-specific electronic program guide acquisition device 402 requests that the electronic program guide analysis device 333 read an all-station electronic program guide stored in the electronic program guide storage device 337. The all-station electronic program guide thus read is stored in the memory 339. The automatic station-specific electronic program guide acquisition device 402 then performs a character string search for keywords and categories on the program contents for each program 645 (in Fig. 7). If there is a program resulting in a hit, the transmission path identifier of the transmission path including the station of this program is stored in memory 339. After similar searches of all transmission paths have ended, by outputting the transmission path identifiers stored in memory as stations resulting in program hits, a transmission path for station-specific electronic program guide acquisition can be identified.

Based on the transmission path input in step S33, the automatic station-specific electronic program guide acquisition device 402 performs electronic program guide storage processing (S40), and if electronic program guide storage processing is completed, then processing to automatically acquire station-specific electronic program guides ends.

According to this embodiment, the viewers search for programs matching their own interests by specifying keywords or categories, and can automatically and preferentially acquire station-specific electronic program guides for corresponding stations. It is anticipated that when there exist numerous stations (channels) and the number of station-specific electronic program guides for acquisition is very large, it may not be possible to acquire all station-specific electronic program guide. Also, in contrast with the third embodiment, a situation is conceivable in which a viewer with absolutely no information regarding what programs are broadcast by which stations cannot select a station for program guide acquisition. According to this embodiment, simply by specifying keywords or categories relating to a program which the viewer wishes to watch, stations are limited to stations broadcasting programs matching these keywords or categories, and the station-specific electronic program guides for these stations can be reliably acquired, so that convenience for the user is improved.

Next, a fifth embodiment is explained. The fifth embodiment is an another example in which steps S10 and S30 in Fig. 5 are modified. In this example, in the broadcast receiving apparatus which overwrites and stores the all-station electronic program guide for every update of all-station electronic program guide, stations for which program guide contents have been changed are detected, and in a non-watching state the station-specific electronic program guides for stations for which program guide contents have been changed are acquired.

The all-station electronic program guide is normally distributed over all transmission paths within the network at fixed periods, and the receiver apparatus can detect updates by checking the version number 630 of the all-station electronic program guide. When the all-station electronic program guide is updated, if in the watching state, the receiver apparatus overwrites and saves the all-station electronic program guide over the existing all-station electronic program guide. Also, if the all-station electronic program guide is currently displayed onscreen, the screen is updated.

Updates of station-specific electronic program guides can also be detected by checking the version number 630, but it is necessary to switch to the transmission path over which the station-specific electronic program guide is distributed, and watching is interrupted; hence realtime detection of updating for all stations is not possible.

Hence after updating the all-station electronic program guide, stations for which program guide contents have been changed are searched from the all-station electronic program guide, stations are identified of which the station-specific electronic program guide should be updated, and while in a non-watching state the station-specific electronic program guides are acquired.

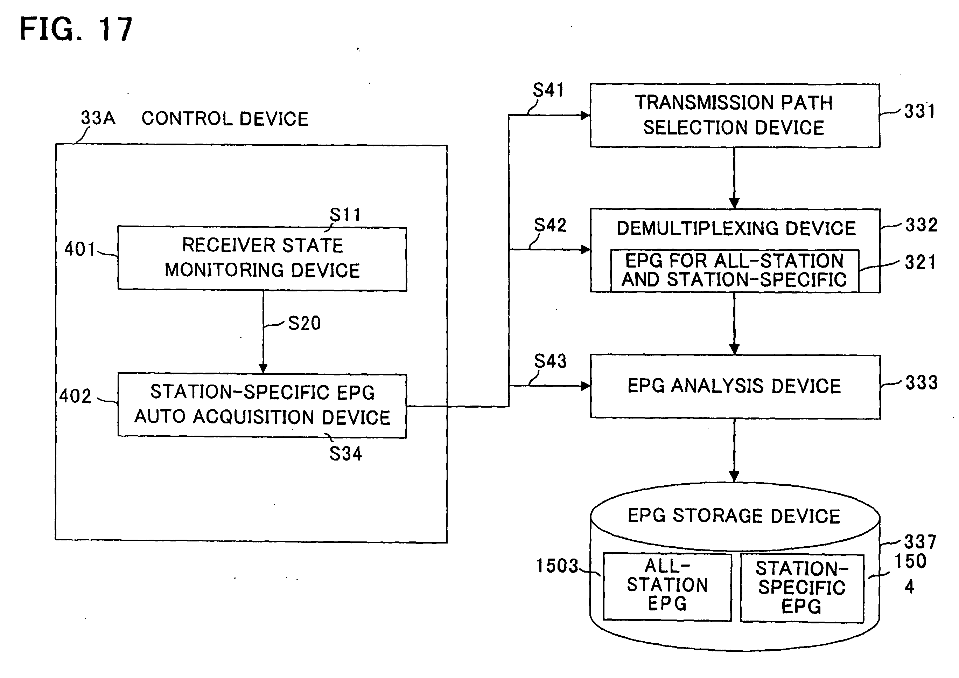

Fig. 17 shows the configuration relating to electronic program guide storage processing in the fifth embodiment. In this embodiment, in addition to the station-specific electronic program guide 1504, the all-station electronic program guide 1503 is also stored. The data format of the stored all-station electronic program guide is the same as in the example of Fig. 7.

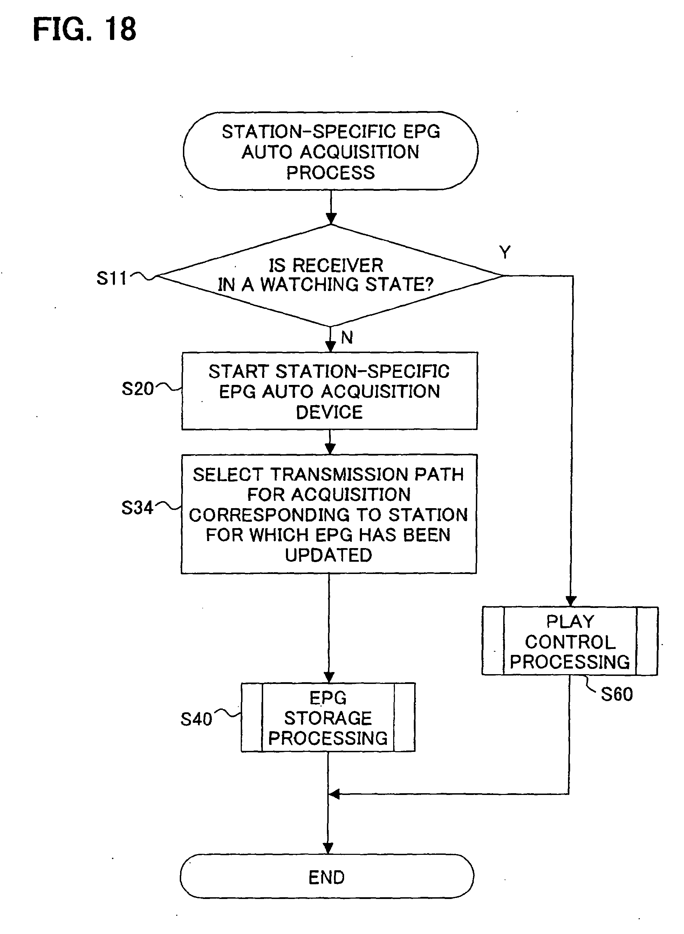

Steps numbered Sxx in Fig. 17 correspond to steps in the flowchart of the fifth embodiment in Fig. 18. Hence the following explanation also refers to Fig. 18.

In automatic station-specific electronic program guide acquisition processing, the control device 33A first judges whether the receiver apparatus is in a watching state (S11). If not in a watching state, the automatic station-specific electronic program guide acquisition device is started (S20). If in a watching state, play control processing (S60) is performed. After play control processing is completed, processing for automatic acquisition of station-specific electronic program guides also ends.

The automatic station-specific electronic program guide acquisition device 402 started in step S20 compares the stored all-station electronic program guide with the all-station electronic program guide just acquired, and selects, as transmission path for which station-specific electronic program guides are to be acquired, transmission paths including stations for which program guide contents have been updated (S34).

The method of determining the transmission path in step S34 can for example be executed as follows. The automatic station-specific electronic program guide acquisition device 402 instructs the electronic program guide analysis device 333 to read the all-station electronic program guides for the previous update. The all-station electronic program guide thus read is stored in memory 339. Next, the automatic station-specific electronic program guide acquisition device 402 instructs the transmission path selection device 431 to acquire the all-station electronic program guides from all networks. The acquired all-station electronic program guides are stored in memory 339. The automatic station-specific electronic program guide acquisition device 402 then compares, for each network, the version numbers 630 of the previously acquired all-station electronic program guide and of the just-acquired all-station electronic program guide, and judges whether there has been an information update. If it is judged that there has been an update, the two all-station electronic program guides are compared for each station, the transmission path identifiers of transmission paths including stations for which information has been updated are detected and stored in memory 339, and all the transmission path identifiers stored in this way are sent to the transmission path selection device 331, enabling identification of the transmission paths for station-specific electronic program guide acquisition. Also, an all-station electronic program guide for which an update is judged to have occurred is overwritten and stored.

Based on the transmission paths input in step S34, the automatic station-specific electronic program guide acquisition device performs electronic program guide storage processing (S40), and if electronic program guide storage processing is completed, automatic station-specific electronic program guide acquisition processing also ends.

Updates of an all-station electronic program guide can happen mostly in cases in which program information is distributed for a date for which there had previously been no information, and cases in which the current and next broadcasting program information is updated. In this embodiment, it is possible to automatically update station-specific electronic program guides while in a non-watching state in both cases, according to updates to the all-station electronic program guide. Hence when the viewer returns from a non-watching state to a watching state, it is possible to prevent erroneous program selection based on old information.

Further, in this embodiment the previously acquired all-station electronic program guide and the just-acquired all-station electronic program guide are compared in a non-watching state; but acquisition of an all-state electronic program guide in the same network does not require switching of the transmission path, so that it is possible to compare the all-station electronic program guides while in a watching state, identify stations (or transmission paths) for which acquisition of the station-specific electronic program guide is necessary, and when in a non-watching state, acquire the station-specific electronic program guides for these stations. Here, for example, the following method may be used.

When updates to the all-station electronic program guide of the network currently selected with the receiver apparatus in a watching state are detected, the previously acquired all-station electronic program guide and the just-acquired all-station electronic program guide are compared. Stations for which there have been content updates are saved to a station-specific electronic program guide acquisition flag list, which lists station-specific electronic program guides for acquisition.

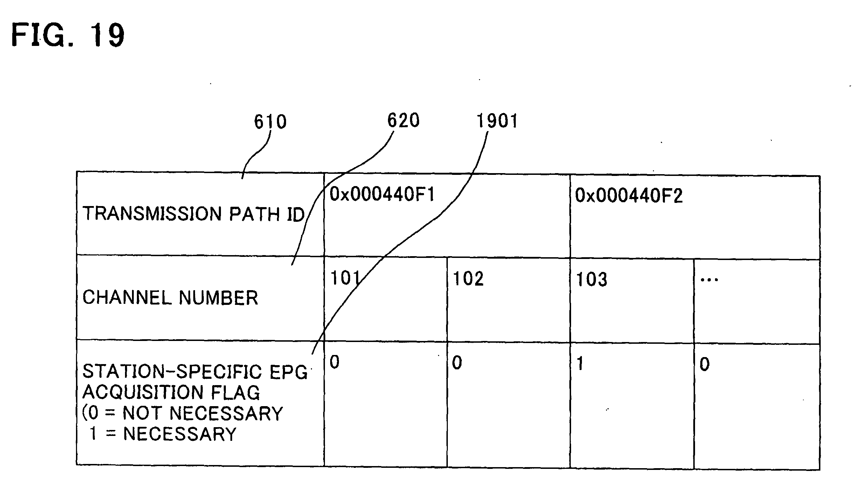

Fig. 19 shows an example of the storage format of a station-specific program guide acquisition flag list, in which station-specific electronic program guides to be acquired are listed. In addition to the transmission path identifier 610 and channel number 620 of Fig. 6, a field for station-specific electronic program guide acquisition flags 1901 is also provided. A station-specific electronic program guide acquisition flag of 1 indicates that acquisition of the station-specific electronic program guide for that station is necessary; 0 indicates that acquisition is not necessary.

Thereafter, when the receiver apparatus enters a non-watching state, the control device 33A, by outputting to the transmission path selection device the transmission path identifiers of stations for which the station-specific electronic program guide acquisition flag in the above station-specific electronic program guide acquisition flag list is set to 1, can identify the transmission paths for guide acquisition. At this time, flags are reset to 0 in preparation for subsequent updates.

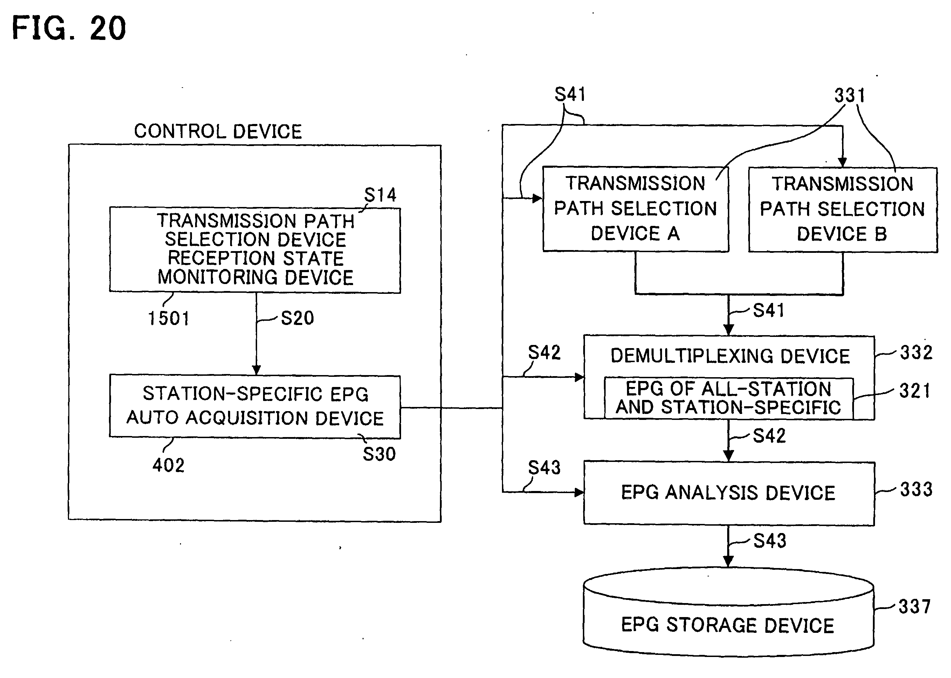

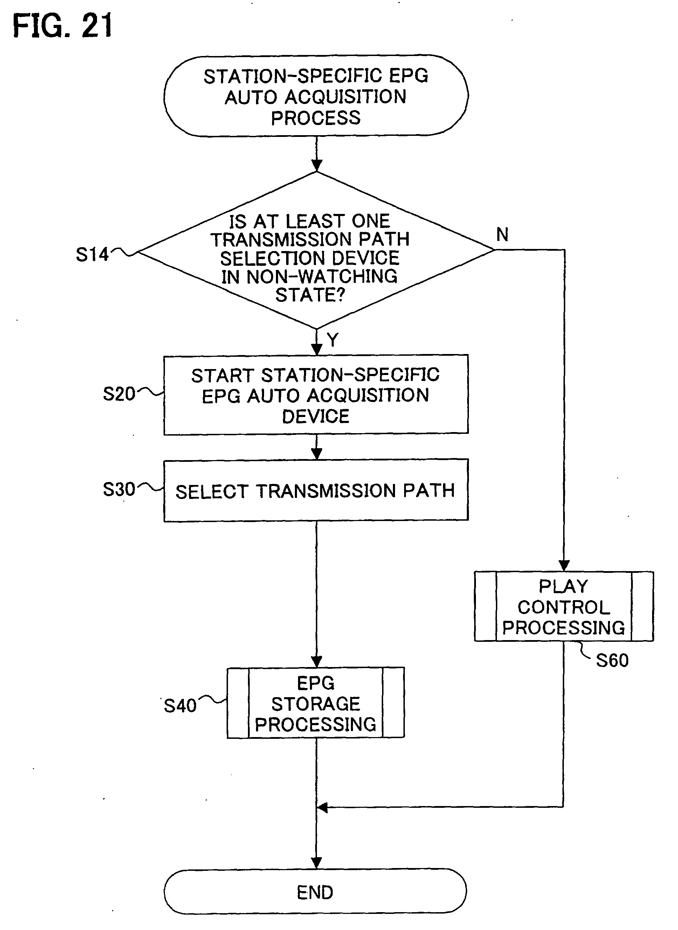

Next, a sixth embodiment is explained. The sixth embodiment is an another example in which step S10 in Fig. 5, illustrating the second embodiment, is modified, and is an example in which, when a plurality of transmission path selection devices are provided in the receiver apparatus, if any one of these is not in the receiving state, automatic acquisition of station-specific electronic program guides is performed. Fig. 20 shows the configuration relating to electronic program guide storage processing in the sixth embodiment. Step numbers in Fig. 20 correspond to steps in the flowchart of the sixth embodiment in Fig. 21. Hence the following explanation also refers to Fig. 21.

In Fig. 21, during processing for automatic acquisition of station-specific electronic program guides, the transmission path selection device reception state monitoring device 1501 first checks the reception states of the transmission path selection devices, and judges whether there exists even one transmission path selection device not in a receiving state (S14).

If there exists even one transmission path selection device not in a receiving state, the automatic station-specific electronic program guide acquisition device is started (S20). If all are in a receiving state, processing for automatic acquisition of station-specific electronic program guides ends.

The automatic station-specific electronic program guide acquisition device 402 started in step S20 selects prescribed transmission paths according to the method of the second through fifth embodiments, and outputs these transmission paths to a transmission path selection device (S30).

Based on the transmission paths input in step S30, the automatic station-specific electronic program guide acquisition device performs electronic program guide storage processing (S40), and, if electronic program guide storage processing is completed, processing for automatic acquisition of station-specific electronic program guides also ends.

According to this embodiment, even if a transmission path selection device is receiving broadcast signals for watching within a receiver apparatus having a plurality of transmission path selection devices, if another transmission path selection device is in a state enabling reception, automatic acquisition of station-specific electronic program guides can be initiated.

The above-described embodiments are not limited to television broadcasts, but may be applied to radio broadcasts as well. In this case, in the above embodiments "viewer" is replaced with "listener", and judgment of receiving states can be performed according to whether broadcast play data for listening is being output to an audio/video output device, that is, according to whether the state is a listening state. Moreover, in all of the above-described embodiments, processing for automatic acquisition of station-specific electronic program guides may be realized through a computer-executable program.

### INDUSTRIAL APPLICABILITY

According to the above-described invention, station-specific electronic program guides can be acquired automatically, without imposing on the viewer the burden of selecting a transmission path including the station for which each time a station-specific electronic program guide is to be acquired, without interrupting a program during watching, and without altering the normal watching habits of the viewer. Moreover, the viewer's own tastes and categories can be reflected in preferentially acquired station-specific electronic program guides.

## Claims

1. A broadcast receiver apparatus which acquires electronic program guide, comprising:
a transmission path selection device, which switches to a specified transmission path and receives broadcast signals from the transmission path;
a demultiplexing device, which separates said electronic program guide and broadcast play data from said received broadcast signals;
an electronic program guide storage device, which stores said electronic program guide; and,
a control device, which judges a receiving state of said broadcast receiver apparatus, determines a prescribed transmission path including a station-specific electronic program guide being included by the broadcast signals of each transmission path and being to be acquired, acquires said station-specific electronic program guide included by said determined transmission path when said broadcast receiver apparatus is judged to be in a non-receiving state, and stores said station-specific electronic program guide in said electronic program guide storage device.

2. The broadcast receiver apparatus according to claim 1, wherein the receiving state of said broadcast receiver apparatus is judged by confirming the receiving state of said transmission path selection device.

3. The broadcast receiver apparatus according to claim 1, further comprising a display synthesis device which outputs broadcast play data for watching,
wherein the receiving state of said broadcast receiver apparatus is judged by confirming the broadcast play data output state of the display synthesis device at fixed time intervals.

4. The broadcast receiver apparatus according to claim 1, wherein the non-receiving state of said broadcast receiver apparatus is judged according to an electric power state of said broadcast receiver apparatus.

5. The broadcast receiver apparatus according to claim 1, wherein from among said station-specific electronic program guides stored in said electronic program guide storage device, the transmission path containing a station for which stored volume of station-specific electronic program guide data is smallest, is determined as said prescribed transmission path.

6. The broadcast receiver apparatus according to claim 1, further comprising a program guide acquisition setting station holding device which holds a station set by the viewer or listener,
wherein the transmission path including the station held by said program guide acquisition setting station holding device is determined as said prescribed transmission path.

7. The broadcast receiver apparatus according to claim 1, further comprising a search condition holding device which holds search conditions specified by the viewer or listener,
wherein a transmission path including a station which broadcasts a program matching the search conditions held by said search condition holding device is determined as said prescribed transmission path.

8. The broadcast receiver apparatus according to claim 1, wherein a transmission path including a station containing a program the contents of which have been updated in an all-station electronic program guide, included in common by the broadcast signals of a plurality of transmission paths, is determined as said prescribed transmission path.

9. The broadcast receiver apparatus according to claim 1, further comprising a plurality of said transmission path selection devices,
wherein, when at least one among said plurality of transmission path selection devices is in a non-receiving state, said broadcasting receiver apparatus is judged to be in a non-receiving state.

10. A program, executed by a broadcast receiver apparatus which switches to a specified transmission path, receives broadcast signals from the transmission path, separates an electronic program guide and broadcast play data from said received broadcast signals, and stores said electronic program guide in an electronic program guide storage device, which causes said broadcast receiver apparatus to execute the steps of:
judging the broadcast signal receiving state;
determining a prescribed transmission path including a station-specific electronic program guide being included by the broadcast signals of transmission paths and being to be acquired;
acquiring said station-specific electronic program guide included by said determined transmission path when said broadcast receiver apparatus is judged to be in a non-receiving state; and,
storing said station-specific electronic program guide in said electronic program guide storage device.

11. The program according to claim 10, wherein the receiving state of said broadcast receiver apparatus is judged by confirming the receiving state of said switched transmission path.

12. The program according to claim 10, further comprising the steps of causing a display synthesis device to output broadcast play data for watching,
wherein the receiving state of said broadcast receiver apparatus is judged by confirming the output state of broadcast play data of said display synthesis device at fixed time intervals.

13. The program according to claim 10, wherein the non-receiving state of said broadcast receiver apparatus is judged according to an electrical power state of said broadcast receiver apparatus.

14. The program according to claim 10, wherein, among said station-specific electronic program guides stored in said electronic program guide storage device, the transmission path including a station for which stored volume of station-specific electronic program guide data is smallest, is determined as said prescribed transmission path.

15. The program according to claim 10, further comprising the steps of causing a program guide acquisition setting station holding device to hold a station set by the viewer or listener,
wherein the transmission path including the station held in said program guide acquisition setting station holding device is determined as said prescribed transmission path.

16. The program according to claim 10, further comprising the steps of causing a search condition holding device to hold search conditions set by the viewer or listener,
wherein a transmission path including a station which broadcasts a program matching the search conditions held by said search condition holding device is determined as said prescribed transmission path.

17. The program according to claim 10, wherein a transmission path including a station containing a program the contents of which have been updated in an all-station electronic program guide, included in common by the broadcast signals of a plurality of transmission paths, is determined as said prescribed transmission path.

18. The program according to claim 10, wherein said broadcast receiver apparatus comprises a plurality of transmission path selection devices each of which switches to a specified transmission path and receives the broadcast signals from the transmission path, and wherein when at least one among said plurality of transmission path selection devices is in a non-receiving state, said broadcast receiver apparatus is judged to be in a non-receiving state.
